# EUROPÄISCHE PATENTSCHRIFT

(11) **EP 4 551 985 B1**
(45) Veröffentlichungstag und Bekanntmachung des Hinweises auf die Patenterteilung: **10.06.2026**
(21) Anmeldenummer: 23739159.4
(22) Anmeldetag: 30.06.2023
(51) Int. Cl.: B29D 11/00, G02B 27/01, G02C 7/08, G02C 11/00, F21V 8/00, G02B 27/00

(54) **VERFAHREN ZUM HERSTELLEN EINER OPTISCHEN ANORDNUNG UMFASSEND EINEN LICHTWELLENLEITER UND EIN OPTISCHES BAUTEIL**
METHOD FOR PRODUCING AN OPTICAL ARRANGEMENT COMPRISING AN OPTICAL WAVEGUIDE AND AN OPTICAL COMPONENT
PROCÉDÉ DE FABRICATION D'UN AGENCEMENT OPTIQUE COMPRENANT UN GUIDE D'ONDES OPTIQUE ET UN COMPOSANT OPTIQUE

(30) Priorität: 07.07.2022 DE 102022117022
(43) Veröffentlichungstag der Anmeldung: 14.05.2025
(73) Patentinhaber: tooz technologies GmbH, 73430 Aalen (DE)
(72) Erfinder: BERNER, Andrea, 07745 Jena (DE); GEISSLER, Enrico, 07749 Jena (DE); HENSEL, René, 73431 Aalen (DE)
(74) Vertreter: PATERIS Patentanwälte PartmbB
(86) Internationale Anmeldenummer: PCT/EP2023/068110
(87) Internationale Veröffentlichungsnummer: WO 2024/008593

(56) Entgegenhaltungen:
- WO-A1-2022/012245
- US-A1- 2017 351 095
- US-A1- 2020 183 170
- US-A1- 2020 192 095

## Beschreibung

Die vorliegende Erfindung betrifft ein Verfahren zum Herstellen einer optischen Anordnung, eine optische Anordnung, eine Bilderfassungsvorrichtung und eine Bildwiedergabevorrichtung.

Head-Mounted-Displays, zum Beispiel in Form von Datenbrillen oder AR-Headsets (AR - Augmented Reality) oder VR-Headsets (VR - Virtual Reality) oder MR-Headsets (MR - Mixed Reality) oder AR- oder VR- oder MR-Brillen oder AR- oder VR- oder MR-Helmen, kommen in zahlreichen Zusammenhängen zur Anwendung. Hierbei werden die Lichtwellen zum Erzeugen eines virtuellen Bildes üblicherweise nach der Einkopplung in einem Lichtwellenleiter mittels Totalreflexion bis zu einer Auskopplung geführt. Blickt ein Nutzer durch eine "Augmented-Reality-Brille" oder kurz "AR-Brille", so sieht er seinem Bild der realen Welt ("reales Bild") ein eingekoppeltes oder eingespiegeltes "virtuelles Bild" überlagert. Diese Überlagerung wird durch einen Strahlvereiniger ("Beamcombiner") erreicht, der einerseits für das Umgebungslicht transparent ist, andererseits auch ein durch einen externen Bildgeber erzeugtes Strahlenbündel auf das Auge eines Betrachters oder in eine Eyebox lenkt. Dieses Strahlenbündel nimmt das Auge als virtuelles Bild wahr.

Im Rahmen vielfältiger optischer Anwendungen wird ein virtuelles Bild mittels eines Lichtwellenleiters übertragen und zu einer Eyebox oder zum Auge eines Betrachters aus dem Lichtwellenleiter in den Strahlengang einer realen Abbildung der Umgebung ausgekoppelt. Hierbei wird üblicherweise eine optische Anordnung benötigt, welche den Lichtwellenleiter und mindestens ein mit diesem verbundenes weiteres optisches Bauteil oder Element, zum Beispiel in Form einer Linse, insbesondere eines Brillenglases, oder eines Sichtfensters, umfasst. Beispiele für derartige Anwendungen sind Head-Mounted-Displays (HMD), Head-up-Displays (HUD) oder Near-to-eye-Displays. Weitere Anwendungen, welche einen Lichtwellenleiter und mindestens ein mit diesem verbundenes weiteres optisches Bauteil erfordern sind Imaging-Anordnungen oder Imaging-Vorrichtungen (Smart Glasses mit beispielsweise Gestenerkennung oder Eyetracking).

Unter einem Lichtwellenleiter (Lightguide) wird ein Wellenleiter verstanden, welcher dazu ausgelegt ist, Lichtwellen durch Totalreflexion an Oberflächen des Wellenleiters im Inneren des Wellenleiters durch diesen zu führen oder weiterzuleiten. Unter Lichtwellen werden elektromagnetische Wellen mit Wellenlängen im Bereich zwischen 300 nm (ultraviolettes Licht) und 2 µm (infrarotes Licht) verstanden, insbesondere Lichtwellen im sichtbaren Bereich und nahen Infrarot- und nahen Ultraviolettbereich.

Der Raumbereich, von welchem aus das virtuelle Bild durch einen Betrachter visuell wahrnehmbar ist, wird auch als Eyebox bezeichnet. Die beiden Außenoberflächen des Lichtwellenleiters sind häufig als parallele Planflächen ausgebildet, damit innerhalb des Lichtwellenleiters weder optische Brechkraft eingeführt wird, noch Aberrationen, die die Bildqualität beeinträchtigen, erzeugt werden.

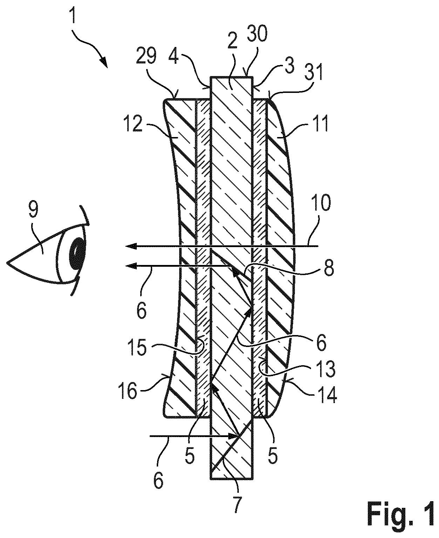

Zur Korrektur der Fehlsichtigkeit, z.B. Ametropie (Fehlsichtigkeit) bzw. Presbyopie (Alterssichtigkeit), des Benutzers eines Head-Mounted-Displays (HMD), z.B. eine AR-, VR-, oder MR-Brille oder ein AR-, VR-, oder MR-Helm, wird bevorzugt das sogenannte Push/Pull-Linsen Konzept verwendet. Das **HMD** besteht dabei aus zwei Brillenglaslinsen (Push- und Pull-Linse) und einem Wellenleiter, der sich zwischen den Linsen befindet (siehe Figur 1). Der Wellenleiter transportiert das von einem Display oder Bildgeber eingekoppelte Licht des virtuellen Bildes vor das Auge des Betrachters, wo es zum Auge hin oder in eine Eyebox ausgekoppelt wird. Die Pull-Linse kann das virtuelle Bild zum Betrachter ziehen. Die Push-Linse korrigiert die Brechkraft der Pull-Linse für die reale Abbildung der Umgebung, also die einen Betrachter umgebende Szene. Zusätzlich kann die Pull-Linse zur Korrektur von Fehlsichtigkeit des Betrachters ausgelegt sein. Die Pull-Linse und/oder die Push-Linse können also die Implementierung einer Sehkorrektur bei vorhandener Fehlsichtigkeit des Betrachters ermöglichen. Wenn das virtuelle Bild im Unendlichen abgebildet werden sollte, wird keine Push-Linse benötigt.

Die Funktion des Lichtwellenleiters erfordert die Totalreflektion der bildgebenden Strahlen an einander gegenüber liegenden Oberflächen. Die Oberflächen können plan oder gekrümmt ausgestaltet sein. Die vorliegende Erfindung ist prinzipiell für beide Varianten anwendbar. Ein kleiner Grenzwinkel für die Totalreflektion ermöglicht ein großes Field of View (FoV). Ein kleiner Grenzwinkel erfordert eine ausreichend große Brechzahldifferenz zwischen dem Lichtwellenleiter und dem angrenzenden Medium. Das schließt eine direkte Verbindung der Push/Pull-Linsen an den Lichtwellenleiter aus, da diese Bauteile aus ähnlich hochbrechenden Materialien, also Materialien mit einem hohen Brechungsindex, bestehen. Niedrigbrechende Medien, also Materialien mit einem niedrigen Brechungsindex, können als Zwischenschicht eingebracht werden. Beispiele sind Luft (bzw. generell Gase) mit Brechzahl 1 oder stark fluorhaltige Flüssigkeiten oder Feststoffe mit Brechzahlen im Bereich 1,29 bis 1,4. Zur technischen Realisierung eines solchen Materialverbunds sind die folgenden Varianten bekannt: Ein vollflächiges Kleben mit niedrigbrechendem Klebstoff wird in den Dokumenten DE102016105060B3 und US2020183170A1 beschrieben. Die Verwendung eines Luftspalts (air gap) zwischen Linse und Lichtwellenleiter wird in den Dokumenten US2021364802A1, US10108011B2, US10845616B2, WO2018166921A1, US10466483B2, US10007115B2 und US10859837B2 offenbart. Die Verwendung permanenter Abstandshalter (spacer) zum Einstellen der Abstände von Linsen zu Lichtwellenleiter wird in den Dokumenten US11262585B2, US10108011B2 und WO2004001484A1 ausgeführt. Eine Nutzung von Aussparungen (recess) zur passiven Ausrichtung der optischen Bauteile wird in dem Dokument US9568734B1 beschrieben. Ein Umgießen (molding) des Lichtwellenleiters mit flüssigem Linsenmaterial und anschließender Aushärtung wird in den Dokumenten US10509155B2, US7022268B2, US7800827B2, EP2418073B1, US10288907B2 ausgeführt. Als Stand der Technik kann auch US2017351095A1 angeführt werden.

Das Umgießen sowie Aussparungen werden üblicherweise nicht vollflächig durchgeführt und besitzen folgende Nachteile: Die Kanten des Lichtwellenleiters bzw. der Aussparungen sind sichtbar, vor allem, wenn ein niedrigbrechendes Medium zur Gewährleistung der Totalreflexion den Wellenleiter umgibt. Das Linsenmaterial (z.B. Polymer) dehnt sich thermisch sehr viel stärker aus als der Lichtwellenleiter (z.B. bestehend aus Glas). Der Lichtwellenleiter lockert sich im Verbund bei erhöhten Temperaturen bzw. es treten thermische Druckspannungen bei erniedrigten Temperaturen auf. Spezifisch für das Umgießen ist es zudem ungünstig, dass die Aushärtung des Linsenmaterials bei erhöhten Temperaturen erfolgt, was beim Abkühlen auf Raumtemperatur zu Spannungen und eventuell einer Deformation des Lichtwellenleiters führen kann. Aussparungen erfordern zusätzlich eine mechanische Bearbeitung der Linsenrückseite unter Einhaltung von engen Toleranzen.

Ein Luftspalt wird üblicherweise vollflächig umgesetzt, besitzt aber folgende Nachteile: Der Verbund der optischen Bauteile mit dazwischenliegendem Luftspalt ist mechanisch instabiler als eine Klebeverbindung, da weder Kraftnoch Formschluss gegeben ist. Eine mögliche Kompensation mittels dickerer Linsen und Wellenleiter führt jedoch zu größerem Gewicht und geringerem Tragekomfort. Bei Kontakt einer durch äußeren Druck verbogenen Linse mit dem Lichtwellenleiter wird die Totalreflektion im Wellenleiter und somit das virtuelle Bild sowie Funktion des HMDs gestört. Es besteht zudem die Gefahr einer Funktionsbeeinträchtigung des HMDs durch mögliche Kondensation von Wasser im Luftspalt. Der Luftspalt erfordert zudem zwei Antireflexionsschichten pro Wellenleiter-Linsen-Übergang, um optische Störungen wie beispielsweise Geisterbilder zu vermeiden.

Permanente Spacer (Abstandshalter) werden zur Realisierung homogener Abstände und einer homogenen Schichtdicke eingesetzt. Sie verbleiben dauerhaft im Verbund und bilden potenzielle Quellen für Streulicht und eine Störung der Totalreflexion, wenn die Brechzahl nicht an das umgebende Medium angepasst ist und/oder die Brechzahldifferenz zwischen Spacer und Wellenleiter nicht ausreichend hoch ist.

Vollflächiges Kleben bildet daher gemäß der vorliegenden Erfindung die bevorzugte Lösung, da beispielsweise die mechanische Stabilität auch bei dünneren Linsen gegeben ist, doch der konkrete Prozess einer Realisierung für die eingangs beschriebenen Anwendungen ist bisher nicht beschrieben. Folgendes ist jedoch zu berücksichtigen: Bei Verwendung von Klebern mit niedrigem Brechungsindex ("low-index-Kleber") besteht die Gefahr einer schlechten Haftung des niedrigbrechenden Klebers an den optischen Bauteilen ohne Vorbehandlung der Oberflächen. Niedrigbrechende Klebstoffe mit Brechzahlen <1,4 sind meist fluorhaltig. Je höher der Fluorgehalt, desto niedriger die Brechzahl (unteres Limit ist 1,3). Fluor reduziert aber die Haftung im Vergleich zu fluorfreien Klebern. Die meisten fluorhaltigen Kleber beinhalten Methacrylat- oder Acrylat-gruppen und lassen sich durch UV-Bestrahlung aushärten. Zur Vermeidung von Interferenzeffekten ist eine definierte, homogene Schichtdicke erwünscht. Austretender Kleber am Rand, der die Integration in einen Brillenrahmen erschwert, ist unerwünscht. Eine gute Positionierung und Ausrichtung der optischen Bauteile sollte gewährleistet sein, sowie eine homogene Belichtung der Klebschicht beim Aushärten.

Vor diesem Hintergrund ist es Aufgabe der vorliegenden Erfindung, ein vorteilhaftes Verfahren zur Herstellung einer optischen Anordnung, eine optische Anordnung, eine Bildwiedergabevorrichtung und eine Bilderfassungsvorrichtung zur Verfügung zu stellen. Diese Aufgabe wird durch ein vorteilhaftes Verfahren zur Herstellung einer optischen Anordnung gemäß Patentanspruch 1, eine optische Anordnung gemäß Patentanspruch 17, eine Bildwiedergabevorrichtung gemäß Patentanspruch 19 und eine Bilderfassungsvorrichtung gemäß Patentanspruch 20 gelöst. Die abhängigen Ansprüche enthalten weitere vorteilhafte Ausgestaltungen der Erfindung.

Das erfindungsgemäße Verfahren ist ein Verfahren zum Herstellen einer optischen Anordnung, welche mindestens einen Lichtwellenleiter und mindestens ein optisches Bauteil umfasst. Bei dem optischen Bauteil handelt es sich um ein optisch wirksames Bauteil, also ein Bauteil, welches eine Wellenfront in einem Strahlengang manipuliert oder verändert, zum Beispiel eine Linse oder ein diffraktives optisches Element oder holographisches optisches Element oder eine refraktive Linse oder Fresnel-Linse oder ein GRIN-Element oder eine Einkoppeleinrichtung, insbesondere ein Einkoppelprisma. Die optische Anordnung kann für ein eingangs genanntes optisches Gerät ausgelegt oder bestimmt sein, zum Beispiel für ein Head-Mounted-Display (HMD), z.B. eine AR-, VR- oder MR-Brille oder einen AR-, VR- oder MR-Helm.

Das erfindungsgemäße Verfahren umfasst folgende Schritte: Ein Lichtwellenleiter mit einer Oberfläche, bei der es sich um eine vorderseitige oder rückseitige Oberfläche handeln kann, und ein optisches Bauteil mit einer rückseitigen Oberfläche werden bereitgestellt. Dabei sind die Oberfläche des Lichtwellenleiters und die rückseitige Oberfläche des optischen Bauteils zur einander zugewandten Anordnung aneinander ausgelegt und weisen eine aneinander angepasste Oberflächengeometrie auf. Die aneinander angepasste Oberflächengeometrie kann zum formschlüssigen Anlegen der beiden Oberflächen aneinander ausgelegt sein.

In einem weiteren Schritt, welcher vor oder nach oder gleichzeitig mit dem zuvor beschriebenen Schritt ausgeführt werden kann, wird mindestens eine Maske bereitgestellt. Unter einer Maske wird im Zusammenhang mit der vorliegenden Erfindung ein Bauelement verstanden, welches dazu ausgelegt ist, einen Bereich einer Oberfläche abzudecken. Die Maske ist dazu ausgelegt, den Randbereich, insbesondere den umlaufenden Randbereich, der Oberfläche des Lichtwellenleiters und der rückseitigen Oberfläche des optischen Bauteils zumindest teilweise abzudecken, vorteilhafterweise vollständig abzudecken. Die Maske kann vorteilhafterweise den umlaufenden Rand der Oberfläche des Lichtwellenleiters vollständig abdecken und die rückseitige Oberfläche des optischen Bauteils hingegen nur teilweise abdecken. Die Geometrie der Maske kann an die Geometrie des Wellenleiters oder des optischen Bauteils, insbesondere an der Geometrie der Randbereiche, angepasst sein, zum Beispiel um eine Justage der Maske zu vereinfachen.

In einem nachfolgenden Schritt wird die Maske auf der Oberfläche des Lichtwellenleiters oder der rückseitigen Oberfläche des optischen Bauteils derart angeordnet, dass der Randbereich der Oberfläche zumindest teilweise, vorteilhafterweise vollständig, abdeckt wird. Die Maske wird bevorzugt an der jeweiligen Oberfläche befestigt, zum Beispiel auf diese aufgeklebt.

In einem nachfolgenden Schritt wird ein Kleber auf die Oberfläche des Lichtwellenleiters oder die rückseitige Oberfläche des optischen Bauteils aufgebracht, bevorzugt auf die Oberfläche, auf welcher die Maske angeordnet ist. Der Kleber wird also auf die jeweilige maskierte Oberfläche aufgebracht. Dabei kann der Kleber in eine Öffnung der Maske eingebracht werden. Dabei kann die Öffnung in diesem Schritt oder im Anschluss an den folgenden Schritt vollständig mit Kleber gefüllt werden, also mindestens vollständig mit Kleber gefüllt werden. In einem nächsten Schritt werden die rückseitige Oberfläche des optischen Bauteils und die Oberfläche des Lichtwellenleiters aufeinander aufgelegt. Die Auflage kann schwimmend sein, insbesondere um den Kleber gleichmäßig zu verteilen. Zum Justieren der Position können Anschläge verwendet werden. In einem nächsten Schritt wird der Kleber ausgehärtet. Nach dem Aushärten wird die Maske entfernt.

Das erfindungsgemäße Verfahren hat die folgenden Vorteile: Es ermöglicht eine homogenen Kleberschichtdicke sowie die einfache Fertigung einer präzise justierten und festen Verbindung zwischen dem Lichtwellenleiter und dem optischen Bauteil, zum Beispiel einer Push- und /oder Pull-Linse. Die oben genannten Nachteile von Luftspalten und permanenten Spacern werden vermieden. Die Implementierung von Aussparungen in der Rückseite des optischen Bauteils, z.B. der Linse, entfällt bei einem erfindungsmäßigen vollflächigen Verbund. Die hergestellte optische Anordnung weist ein geringes Gewicht und eine hohe mechanische Stabilität auf. Die mechanische Stabilität des Verbundes ermöglicht den Einsatz sehr dünner Linsen. Flächiges Kleben erhöht die mechanische Stabilität des Verbunds und verhindert Druckkontakt von Linsen mit Wellenleiter auch bei sehr dünnen Linsen.

Die Maskierung kann ein undefiniertes Austreten des Klebers verhindern und so Reinigungsschritte vermeiden. Es werden durch die Maske eine homogene Klebspaltdicke und/oder ein klebstofffreier Rand gewährleistet.

Es kann insbesondere keine Nachbearbeitung des geklebten Verbundes erforderlich sein, um beispielsweise die Brechkraft des optischen Bauteils, z.B. der Linsen, zu implementieren oder die Berandung für die Integration in einen Brillenrahmen durchzuführen. Auch eine Nachbearbeitung der Linsenoberflächen oder -berandung nach Verbinden mit dem Lichtwellenleiter, so wie z.B. beim Umgießen üblich, ist vorliegend nicht notwendig. Dadurch wird eine zusätzliche Krafteinwirkung auf die Verbindungsfläche vermieden. Bei Verwendung identischer Referenzflächen (z.B. die Kontur des Lichtwellenleiters) für die Fertigung, Justierung und Integration wird eine kurze Toleranzkette (Summe aller Toleranzen der beteiligten Einzelteile und Prozesse) erzielt.

In einer vorteilhaften Variante umfasst die Maske einen Rahmen, vorzugsweise einen geschlossenen Rahmen, zum Beispiel mit einem umlaufenden Rand, eine in dem Rahmen angeordnete Öffnung, zum Beispiel eine als Durchgangsöffnung ausgebildete Öffnung. Die Maske kann zudem eine Anzahl an Vorsprüngen umfassen, also mindestens einen Vorsprung, vorzugsweise drei Vorsprünge. Die Anzahl an Vorsprüngen erstreckt sich in dieser Variante von dem Rahmen oder Rand in die Öffnung hinein. Es ist in dieser Variante also mindestens ein in die Öffnung hineinragender Vorsprung vorhanden. Der Vorsprung oder die Vorsprünge kann/können zum Beispiel als Ausstülpung/en ausgestaltet sein. Die Öffnung der Maske kann zum Beispiel kleiner sein als die rückseitige Oberfläche des optischen Bauteils, insbesondere so dass die Linse außen komplett auf der Maske aufliegen kann. Es ist auch möglich, diese Variante mit weiteren Abstandshaltern zu kombinieren. Es können auch lediglich die Vorsprünge einen Teilbereich der genannten Oberfläche des Lichtwellenleiters und/oder der rückseitigen Oberfläche des Lichtwellenleiters abdecken. Es kann die Geometrie der Öffnung bevorzugt im Übrigen an den äußeren Rand der zu maskierenden Oberfläche, also der Oberfläche des Lichtwellenleiters oder der rückseitigen Oberfläche des optischen Bauteils angepasst sein.

Eine weitere Option besteht darin, die Oberfläche des Lichtwellenleiters und die rückseitige Oberfläche des optischen Bauteils jeweils einzeln mit einer separaten Maske abzudecken. Dies hat den Vorteil, dass überschüssiger Klebstoff beim Aufeinanderlegen der genannten Oberflächen zwischen den beiden Masken austreten kann und somit gemeinsam mit den Masken entfernt werden kann.

Die Oberfläche des Lichtwellenleiters kann einen zur Totalreflexion ausgelegten Flächenbereich (optisch aktiver Bereich) umfassen. Die Maske kann so ausgebildet sein, dass die von der Maske nicht abgedeckte Fläche zum Beispiel die Querschnittsfläche der Öffnung, an den zur Totalreflexion ausgelegten Flächenbereich angepasst ist, beispielsweise diesem entspricht oder eine mit diesem identische oder ähnliche Geometrie aufweist. **In** einem besonders vorteilhaften Ausführungsbeispiel entspricht die von der Maske nicht abgedeckte Fläche, beispielsweise die Öffnung der Maske, mindestens einem Bereich des Lichtwellenleiters, in dem interne Totalreflektion gewährleistet werden muss. Diese Variante ist deshalb von Vorteil, weil der Kleber mit niedrigem Brechungsindex, welcher im Vergleich zu anderen Klebstoffen eine geringere Haftfähigkeit aufweist, nicht vollflächig verwendet werden muss und die Oberflächenbereiche außerhalb des Bereichs, in dem interne Totalreflektion gewährleistet werden muss, mit einem anderen Klebstoff verklebt werden können. Hierdurch wird insgesamt eine verbesserte Haftfähigkeit zwischen dem Lichtwellenleiter und dem optischen Bauteil erreicht.

**In** einer vorteilhaften Variante wird als optisches Bauteil ein optisches Bauteil bereitgestellt, dessen Fertigung bezüglich der optischen Wirkung, insbesondere der Geometrie und/oder der Brechkraftverteilung, abgeschlossen ist. Die optische Wirkung kann optional mögliche Beschichtungen umfassen. Dies ist aber nicht zwingend erforderlich. Es können mögliche Beschichtungen der Oberfläche bereits aufgebracht sein oder nach dem Aushärten des Klebers und/oder nach dem Entfernen der Maske aufgebracht werden. Die Oberflächen des optischen Bauteils sind bereits so geformt, dass sie eine notwendige optische Wirkung, z.B. für eine Fehlsichtigkeitskorrektur, bereitstellen. Bevorzugt ist auch der Rand des optischen Bauteils, zum Beispiel für eine spätere Einfassung in einen Rahmen oder ein Brillengestell, fertiggestellt. Dies hat den Vorteil, dass keine Nachbearbeitung des geklebten Verbundes erforderlich ist. Vorzugsweise ist auch die Fertigung des Lichtwellenleiters abgeschlossen. Abgeschlossen heißt also, dass die geometrische Form (Oberflächenform vorne, hinten und an den Seitenflächen) und resultierende optische Wirkung vor dem Kleben bereitgestellt werden. Hierdurch wird eine einfache und kostengünstige weitere Verarbeitung, z.B. durch einen Optiker, ermöglicht. Das erfindungsgemäße Verfahren kann beispielsweise auch von einem Optiker ausführbar sein.

**In** einer weiteren Variante kann als optisches Bauteil ein optisches Bauteil bereitgestellt werden, welches eine beschichtete vorderseitige Oberfläche umfasst. Dabei kann die vorderseitige Oberfläche zum Beispiel mindestens eine Beschichtung aufweisen, z.B. eine Anti-Reflex-Beschichtung, eine Anti-fog-Beschichtung, eine Antikratz-Beschichtung, etc..

Das Aushärten des Klebers kann vorteilhafterweise durch das optische Bauteil hindurch, zum Beispiel mittels UV-Licht, erfolgen. Hierzu kann Licht einer Wellenlänge gewählt werden, welche von dem optischen Bauteil transmittiert wird. Vorzugsweise wird das Aushärten vollflächig durchgeführt.

Eine flächige Belichtung durch das optische Bauteil, z.B. die Linse, ermöglicht eine homogene Aushärtung, erfordert aber Einhaltung der zuvor genannten Randbedingungen.

Die aufgrund der Maske verursachten Vertiefungen in der erzeugten Kleberschicht zwischen dem Lichtwellenleiter und dem optischen Bauteil, können mit Kleber aufgefüllt werden. Dies betrifft insbesondere aufgrund der Vorsprünge der Maske durch die Entfernung der Maske entstandene Vertiefungen, also z.B. durch die sich in die Öffnung der Maske hinein erstreckenden Vorsprünge der Maske verursachten Vertiefungen. Das Auffüllen hat den Vorteil, dass eine vollständige Kleberschicht vorhanden ist und mögliche Störungen oder Aberrationen durch die entstandenen Vertiefungen vermieden werden. Das Resultat ist also ein Verbund ohne optische Störstellen, da keine Spacermaterialien in der Klebschicht und somit im Sichtfeld des Betrachters verbleiben.

In einer weiteren Variante kann nach dem Entfernen der Maske zwischen die Oberfläche des Lichtwellenleiters und die rückseitige Oberfläche des optischen Bauteils ein weiterer Kleber eingebracht werden, welcher eine von dem zuvor aufgebrachten Kleber abweichende Zusammensetzung aufweist. Für das Auffüllen kann also ein anderer Kleber verwendet, um beispielweise die mechanische Stabilität zu erhöhen. Vorzugsweise ist der Brechungsindex dieses Klebers an den Brechungsindex des Lichtwellenleiters, der Linse oder des ersten Klebers angepasst. Falls der erste Kleber, also der zum Verkleben von zur Totalreflexion ausgelegten Flächenbereichen ausgelegte Kleber, einen niedrigen Brechungsindex aufweist, weist er möglicherweise eine geringere mechanische Beständigkeit, z.B bei thermischer Belastung, auf als andere Kleber. Der weitere Kleber kann eine höhere Festigkeit aufweisen. Wie oben bereits beschrieben kann der weitere Kleber zum Beispiel auf Oberflächenbereiche des Lichtwellenleiters aufgebracht werden, welche nicht zur Totalreflexion ausgelegte Flächenbereiche bilden, und braucht deshalb keinen niedrigen Brechungsindex aufzuweisen.

Vorteilhafterweise wird ein Klebstoff mit Brechzahl zwischen 1,3 und 2,0; bevorzugt zwischen 1,3 und 1,5, besonders bevorzugt zwischen 1,3 und 1,4, verwendet. Bevorzugt ist die Brechzahl kleiner als die Brechzahl des Wellenleiters, um die Totalreflexion im Wellenleiter bei kleinen Grenzwinkeln zu gewährleisten und damit ein großes Field of View zu ermöglichen. Die Breite einer gegebenenfalls durch die mindestens eine Maske erzeugten freien Kante, beispielsweise freien Umlaufkante, auf dem Lichtwellenleiter oder dem optischen Bauteil ist vorzugsweise kleiner 10 mm, bevorzugt kleiner 1,5 mm. Sie kann auch völlig vermieden werden, indem der Rand der Öffnung der Maske der äußeren Kontur des Lichtwellenleiters und/oder des optischen Bauteils geometrisch entspricht, also nur die Vorsprünge auf der jeweiligen Oberfläche angeordnet werden.

Als optisches Bauteil kann zum Beispiel eine Linse bereitgestellt werden und/oder ein optisches Element bereitgestellt werden, welches zur Korrektur von Fehlsichtigkeit in einem Abbildungspfad einer realen Abbildung der Umgebung und/oder zur Korrektur von Fehlsichtigkeit in einem Abbildungspfad einer virtuellen Abbildung und/oder zur Fokussierung einer virtuellen Abbildung in einem Abbildungspfad einer virtuellen Abbildung ausgelegt ist. Die Linse und/oder das optische Element können refraktiv und/oder diffraktiv ausgestaltet sein. Die Linse kann insbesondere als eine Push-Linse und/oder eine Pull-Linse ausgebildet sein.

Das optische Bauteil, z.B. die Push-Linse und/oder Pull-Linse, kann aus Kunstsoff oder aus Glas bestehen. Die maximale Rand- und/oder Mittendicke des optischen Bauteils, z.B. der Linse, ist vorteilhafterweise kleiner als 1,5 mm, bevorzugt ist sie kleiner 1 mm.

**In** einer weiteren Variante wird als optisches Bauteil ein optisches Bauteil bereitgestellt, welches eine plan oder gekrümmt ausgestaltete rückseitige Oberfläche umfasst, und als Lichtwellenleiter ein Lichtwellenleiter bereitgestellt wird, welcher eine plan oder gekrümmt ausgestaltete Oberfläche umfasst. Bevorzugt sind die rückseitige Oberfläche des optischen Bauteils und die Oberfläche des Lichtwellenleiters beide plan oder beide gekrümmt ausgestaltet.

Vorteilhafterweise wird als optisches Bauteil ein optisches Bauteil mit einer oxidisch ausgebildeten, z.B. beschichteten, rückseitigen Oberfläche bereitgestellt. Zusätzlich oder alternativ dazu kann als Lichtwellenleiter ein Lichtwellenleiter mit einer oxidisch ausgebildeten, z.B. beschichteten, Oberfläche bereitgestellt werden. Insbesondere können die rückseitige Oberfläche des optischen Bauteils und/oder die Oberfläche des Lichtwellenleiters eine oxidische Beschichtung, z.B. eine Quarzschicht, aufweisen oder im Rahmen des vorliegenden Verfahrens oxidisch beschichtet werden oder oxidisch ausgebildet sein, also oxidisches Material umfassen. Die Quarzschicht bietet die Grundlage für eine Silan-Anbindung von nicht-oxidischem Linsenmaterial. Andere oxidische Schichten oder Materialien sind ebenfalls geeignet. Durch den geringeren Brechzahlhub bei einer Kleber-Linse-Grenzfläche sowie einer Kleber-Wellenleiter-Grenzfläche als bei einer Luft-Linse/Luft-Wellenleiter-Grenzfläche kann auch eine eventuelle Entspiegelungsschicht zwischen Linse und Lichtwellenleiter entfallen oder einfach gehalten werden.

Eine beschriebene oxidische Ausbildung hat den Vorteil, dass eine optimale chemische Bindung mit dem Material des Klebers erreicht wird. Bevorzugt wird hierzu die oxidisch ausgebildete Oberfläche oder die oxidische Beschichtung zur Erzeugung reaktiver Gruppen aktiviert und anschließend mit einem geeigneten Silan beschichtet.

Die Maske kann im Rahmen des vorliegenden Verfahrens individuell gefertigt werden, z.B. durch Schneiden der Maske. Als Material der Maske kann beispielweise Polymerfolien wie Vinyl-, Polyvinylchlorid-, Silikon-, Polyacrylat-, Polyethylenterephthalat- sowie Polyolefin-Folien verwendet werden. Zudem können fluorhaltige sowie perfluorierte Folien eingesetzt werden. Vorzugsweise sind die Folien selbstklebend bzw. haften auf der aufgebrachten Oberfläche ausreichend. Vorzugweise weist die Maske eine Dicke zwischen 1 Mikrometer und 1 Millimeter auf.

Das Anordnen der Maske kann mittels eines Greifers durchgeführt werden. Das Einbringen des Klebers in die Öffnung kann mittels eines Dispensers oder einer Verdrängungspipette durchgeführt werden.

Die Position des Lichtwellenleiters und/oder der Maske und/oder des optischen Bauteils in Bezug auf mindestens ein anderes der zuvor genannten Bauteile kann mittels mindestens eines mechanischen Anschlags justiert werden. Das Justieren erfolgt vorzugsweise nach dem Aufbringen des Klebers und nach dem aufeinander Auflegen der rückseitigen Oberfläche des optischen Bauteils und der Oberfläche des Lichtwellenleiters.

Bevorzugt wird ein Kleber verwendet, welcher eine niedrigere Brechzahl als der Lichtwellenleiter aufweist, oder es wird ein Lichtwellenleiter verwendet, welcher eine Beschichtung mit einem Material aufweist, welches eine niedrigere Brechzahl als der Lichtwellenleiter aufweist. Hierdurch wird die Funktionalität des Lichtwellenleiters durch Totalreflexion sichergestellt.

Die erfindungsgemäße optische Anordnung ist gemäß eines zuvor beschriebenen erfindungsgemäßen Verfahrens hergestellt. Die optische Anordnung kann als Sichtfenster, z.B. als Brillenglas, zum Auskoppeln einer virtuellen Abbildung in Richtung einer Eyebox ausgestaltet sein. Die erfindungsgemäße optische Anordnung hat die bereits im Zusammenhang mit den erfindungsgemäßen Verfahren beschriebenen Merkmale und Vorteile.

Die erfindungsgemäße Bildwiedergabevorrichtung umfasst eine zuvor beschriebene erfindungsgemäße optische Anordnung. Bei der Bildwiedergabevorrichtung kann es sich um ein HMD**,** z.B. eine AR- oder VR- oder MR-Brille oder einen AR- oder VR- oder MR-Helm, handeln. Die erfindungsgemäße Bilderfassungsvorrichtung umfasst eine bereits beschriebene erfindungsgemäße optische Anordnung. Bei der Bilderfassungsvorrichtung kann es sich um eine Imaging-Anordnung oder Imaging-Vorrichtung (Smart Glasses mit beispielsweise Gestenerkennung oder Eyetracking) handeln. Die erfindungsgemäße Bildwiedergabevorrichtung und die erfindungsgemäße Bilderfassungsvorrichtung haben die bereits genannten Merkmale und Vorteile.

Die Erfindung wird im Folgenden anhand von Ausführungsbeispielen unter Bezugnahme auf die beigefügten Figuren näher erläutert. Obwohl die Erfindung im Detail durch die bevorzugten Ausführungsbeispiele näher illustriert und beschrieben wird, so ist die Erfindung nicht durch die offenbarten Beispiele eingeschränkt und andere Variationen können vom Fachmann hieraus abgeleitet werden, ohne den Schutzumfang der Erfindung zu verlassen.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, die die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.
- Fig. 1: zeigt schematisch eine Seitenansicht eines Head-Mounted-Displays.
- Fig. 2: zeigt schematisch ein erfindungsgemäßes Verfahren in Form eines Flussdiagramms.
- Fig. 3: zeigt schematisch eine maskierte Oberfläche eines Lichtwellenleiters oder eines optischen Bauteils in einer Draufsicht.
- Fig. 4: zeigt schematisch die Anordnung eines Lichtwellenleiters, einer Maske und eines optischen Bauteils in verschiedenen Ansichten und Varianten.
- Fig. 5: zeigt schematisch die Schritte eines beispielhaften erfindungsgemäßen Verfahrens.
- Fig. 6: zeigt schematisch die Transmission durch ein beispielhaftes optisches Bauteil in Abhängigkeit von der Wellenlänge des Lichts in Form eines Diagramms.
- Fig. 7: zeigt schematisch eine erfindungsgemäße Bildwiedergabevorrichtung oder Bilderfassungsvorrichtung.

Die Figur 1 zeigt schematisch eine Seitenansicht eines Head-Mounted-Displays 1. Das Head-Mounted-Display umfasst einen Lichtwellenleiter 2, welcher zwei einander gegenüberliegende Oberflächen 3 und 4 umfasst, wovon in der Figur 1 die Oberfläche 3 eine vorderseitige Oberfläche und die die Oberfläche 4 eine rückseitige Oberfläche bilden. Die Bezeichnungen vorderseitig und rückseitig sind dabei im Zusammenhang mit dem erfindungsgemäßen Verfahren austauschbar. Es kann also auch die Oberfläche 4 als vorderseitige Oberfläche angesehen werden. Auf beiden Oberflächen 3 und 4 ist jeweils eine Schicht aus einem niedrigbrechenden Medium 5, also einem Material mit niedriger Brechzahl, z.B. kleiner als 2,0, bevorzugt kleiner als 1,4, angeordnet.

Licht, dessen Strahlengang mit der Bezugsziffer 6 gekennzeichnet ist, wird über eine Einkoppeleinrichtung 7 in den Lichtwellenleiter 2 eingekoppelt. Das Licht 6 wird innerhalb des Lichtwellenleiters 2 durch Totalreflexion zu einer Auskoppeleinrichtung 8 geführt. Mittels der Auskoppeleinrichtung 8 wird das Licht 6 zu einer Eyebox oder einem Auge 9 abgestrahlt. Der Strahlengang 6 kennzeichnet den Abbildungspfad einer eingestrahlten virtuellen Abbildung. Der Strahlengang eines Abbildungspfades einer Abbildung der realen Umgebung ist mit der Bezugsziffer 10 gekennzeichnet. Der Strahlengang 10 kennzeichnet die Abbildung der Umgebung, welche ein Nutzer bei Durchsicht durch das HMD 1 visuell wahrnimmt. Auf der Oberfläche 3 des Lichtwellenleiters 2 ist anschließend an das niedrigbrechende Medium 5 eine erste Linse 11 angeordnet, welche in dem gezeigten Beispiel als Push-Linse ausgestaltet ist. An der Oberfläche 4 des Lichtwellenleiters 2 ist in dem gezeigten Beispiel eine zweite Linse 12 angeordnet, welche beispielsweise als Pull-Linse ausgestaltet sein kann.

Die erste Linse 11 und die zweite Linse 12 umfassen jeweils zwei einander gegenüber angeordnete Oberflächen, wobei hier jeweils die dem Lichtwellenleiter 2 abgewandte Oberfläche als vorderseitige Oberfläche und die dem Lichtwellenleiter 2 zugewandte Oberfläche als rückseitige Oberfläche bezeichnet wird. Der Lichtwellenleiter umfasst einen Rand 30, welcher den Rand der Oberflächen 3 und 4 bildet. Die erste Linse 11 umfasst somit eine dem Lichtwellenleiter 2 abgewandte, vorderseitige Oberfläche 13 und eine dem Lichtwellenleiter 2 zugewandte, rückseitige Oberfläche 14 sowie einen Rand 31. Die zweite Linse 12 umfasst eine dem Lichtwellenleiter 2 zugewandte, rückseitige Oberfläche 15 und eine dem Lichtwellenleiter 2 abgewandte, vorderseitige Oberfläche 16 sowie einen Rand 29.

In dem gezeigten Beispiel sind die Oberflächen 3 und 4 des Lichtwellenleiters 2 und die dem Lichtwellenleiter 2 zugewandten Oberflächen 14 und 15 der Linsen 11 und 12 plan ausgestaltet. Die genannten Oberflächen 3, 4, 14 und 15 können alternativ dazu gekrümmt ausgestaltet sein.

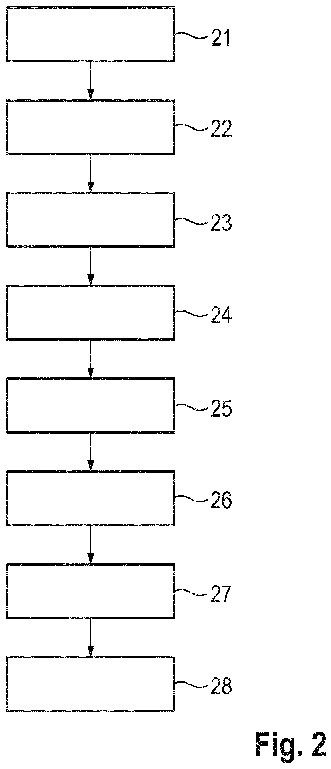

Im Folgenden wird ein Beispiel für ein erfindungsgemäßes Verfahren zum Herstellen einer optischen Anordnung, welche mindestens einen Lichtwellenleiter 2 und ein optisches Bauteil, zum Beispiel mindestens eine der in der Figur 1 gezeigten Linsen 11 und/oder 12, umfasst, anhand des in der Figur 2 gezeigten Flussdiagramms beschrieben. Das Verfahren kann insbesondere zum Herstellen eines in der Figur 1 gezeigten HMD verwendet werden, insbesondere zum Verkleben des Lichtwellenleiters 2 mit einer oder mehreren Linsen 11, 12.

In einem ersten Schritt 21 wird ein Lichtwellenleiter 2 mit einer Oberfläche 3, 4 und ein optisches Bauteil 11, 12, zum Beispiel eine Linse, mit einer rückseitigen Oberfläche 14, 15 bereitgestellt. Die Oberfläche 3, 4 des Lichtwellenleiters und die rückseitige Oberfläche 14, 15 des optischen Bauteils 11, 12 sind zur einander zugewandten Anordnung aneinander ausgelegt und weisen eine aneinander angepasste Oberflächengeometrie auf.

Als optisches Bauteil kann eine Push- und/oder Pull-Linse (optisch wirksames Bauteil) aus Kunststoff oder Glas verwendet werden. Das optische Bauteil oder mehrere optische Bauteile 11, 12 werden entsprechend einer vorgegebenen optischen Auslegung mittels Ultrapräzisionsfertigung oder anderer Fertigungsverfahren hergestellt. Vorzugsweise ist die vorderseitige Oberfläche 13, 16 des optischen Bauteils 11, 12 in optischer Qualität "fertig bearbeitet" bevor das optische Bauteil 11, 12, z.B. die Linse, auf den Lichtwellenleiter 2 geklebt wird. Eine Nachbearbeitung der Linsenoberflächen 13, 16 oder der Linsenberandung 31, 29 nach dem Verbinden mit dem Lichtwellenleiter 2, so wie z.B. beim Umgießen üblich, ist in diesem Fall nicht notwendig. Dadurch wird eine zusätzliche Krafteinwirkung auf die Verbindungsfläche vermieden. Auch eventuelle Beschichtungen (anti-reflex, anti-fog, Anti-Kratzschicht, etc.) sind bevorzugt bereits auf die vorderseitige Oberfläche 13, 16 und/oder die rückseitige Oberfläche 14, 15 aufgebracht. Im Zusammenhang mit dem späteren Aushärten des Klebers kann es von Vorteil sein, wenn eine UV-Schutzschicht erst nach dem Härten aufgebracht wird.

Die rückseitige Oberfläche 14, 15 des optischen Bauteils 11, 12, insbesondere der jeweiligen Linse, ist entweder plan oder gekrümmt, wobei die Krümmung der rückseitige Oberfläche 14, 15 bevorzugt der Krümmung der Oberfläche 3, 4 des Lichtwellenleiters 2 entspricht. Die Formgenauigkeit des optischen Bauteils, z.B. einer instabilen Einzellinse, wird z.B. durch den Verbund mit dem Wellenleiter erreicht. Außerdem sind keine mechanischen Anschlagsflächen oder Aussparungen, z.B. auf der Linse selbst, für die Justierung des Lichtwellenleiters 2 vorzusehen.

In einer optionalen Ausgestaltung wird im Rahmen der Oberflächenvorbehandlung die rückseitige Oberfläche 14, 15 des optischen Bauteils 11, 12, insbesondere der Linsen, mit einer Quarzschicht oder einer anderen oxidischen Schicht beschichtet. Die Quarzschicht ermöglicht nach deren Aktivierung die chemische Anbindung von Silan. Die Aktivierung kann mittels Niederdruckplasma (Luft-/ oder Sauerstoffatmosphäre) oder Atmosphärendruckplasma erfolgen und sorgt für reaktive Gruppen zur kovalenten Bindung des Silans.

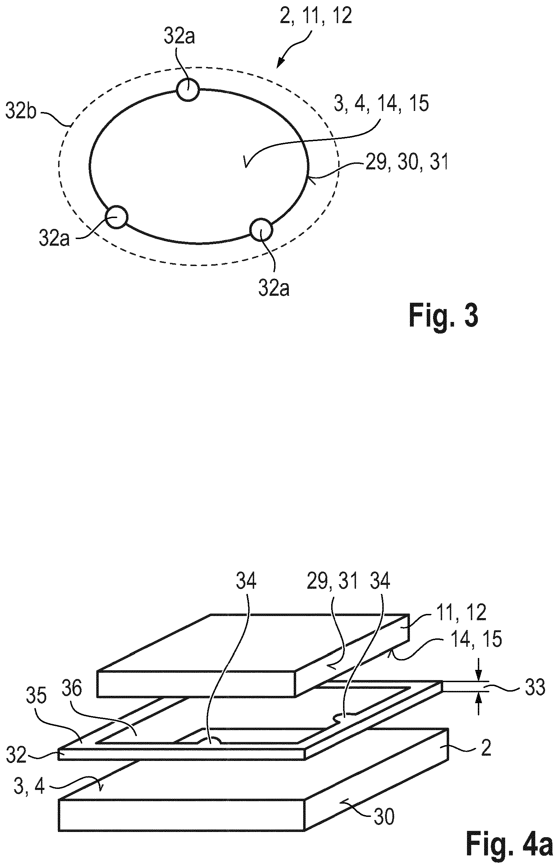

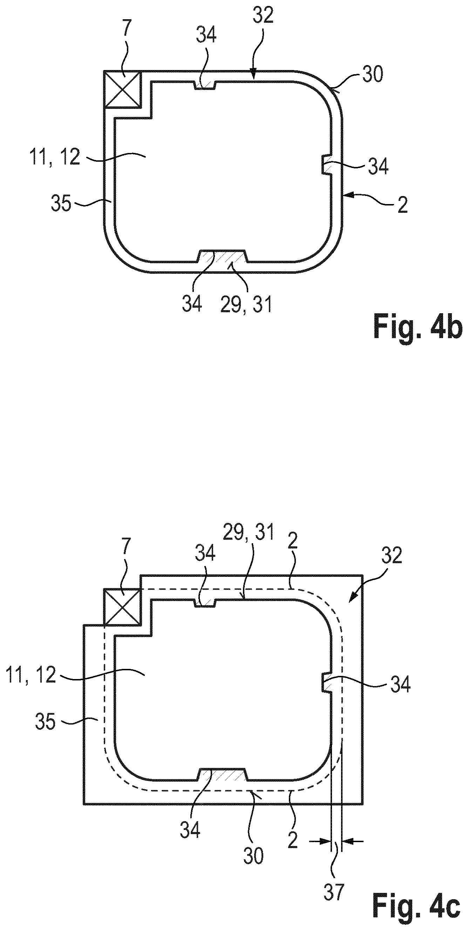

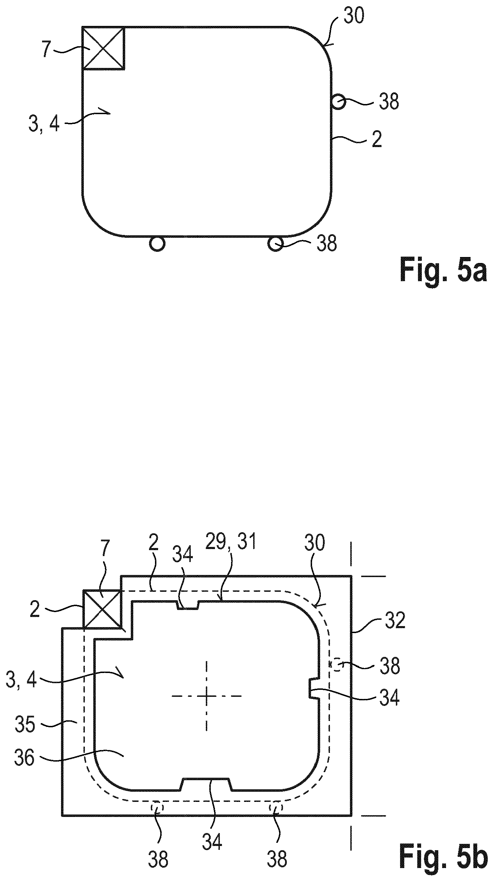

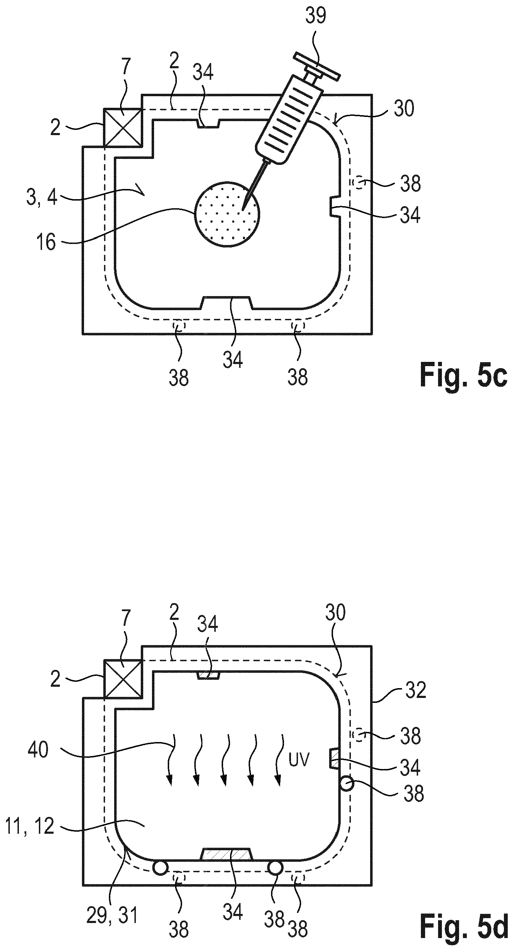

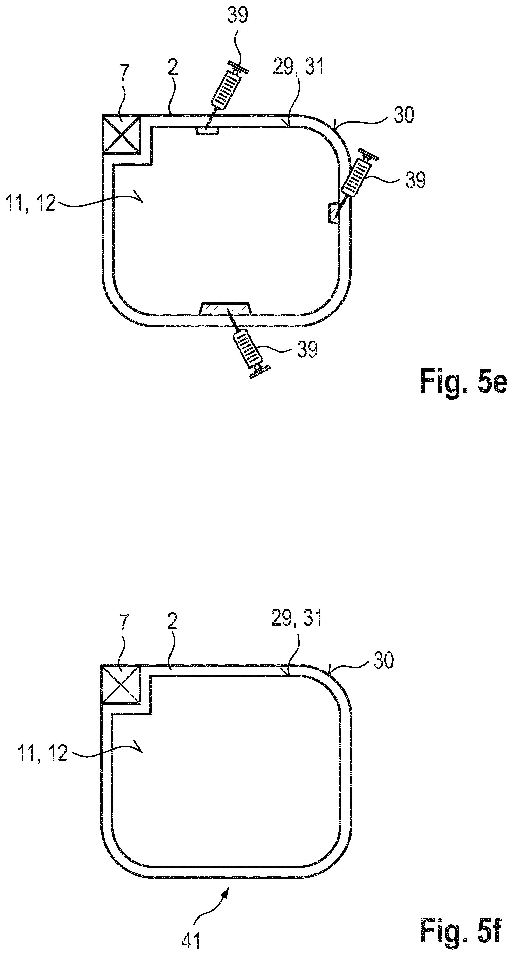

In einem weiteren Schritt 22 (siehe Figur 2) wird eine Maske bereitgestellt. Die Maske umfasst bevorzugt einen Rahmen und eine in dem Rahmen angeordnete Öffnung, zum Beispiel eine Durchgangsöffnung, und eine Anzahl, z.B. mindestens drei, sich von dem Rahmen in die Öffnung hinein erstreckende Vorsprünge umfasst. Dabei ist der Rahmen dazu ausgelegt, den Randbereich der Oberfläche des Lichtwellenleiters und den Randbereich der rückseitigen Oberfläche des optischen Bauteils zumindest teilweise abzudecken. Beispiele hierfür sind in den Figuren 4 und 5 gezeigt.

Alternativ dazu können eine Mehrzahl an Masken verwendet werden. Ein Beispiel hierzu ist in der Figur 3 schematisch gezeigt. Die Figur 3 zeigt eine Oberfläche, bei welcher es sich um eine Oberfläche 3, 4 des Lichtwellenleiters 2 oder eine rückseitige Oberfläche 14, 15 eines optischen Bauteils 11, 12 handeln kann, in einer Draufsicht. Auf der Oberfläche 3, 4, 14, 15 sind auf deren Randbereich drei Masken 32a so angeordnet, dass sie den Randbereich teilweise überdecken. Die Masken 32a ragen vorzugsweise über den Rand 29, 30, 31 hinaus um ein späteres Entfernen der Masken 32a zu erleichtern. Optional ist eine bündig mit dem Rand 29, 30, 31 abschließende Maske 32b um den Rand herum angeordnet, welche dazu ausgelegt sein kann, den Rand 29, 30, 31 vor überschüssigem Klebstoff zu schützen.

Die Maske kann zum Beispiel aus folgenden Polymermaterialien bestehen: Vinyl, Polyvinylchlorid, Silikon, Polyacryl, Polyethylenterephthalat sowie Polyolefine und fluorhaltige Folien. Vorzugsweise ist die Maske selbstklebend. Die Maske kann durch Schneiden gefertigt werden.

In Schritt 23 wird die Maske auf der Oberfläche des Lichtwellenleiters oder der rückseitigen Oberfläche des optischen Bauteils derart angeordnet und vorzugsweise befestigt, z.B. aufgeklebt, dass der Randbereich der Oberfläche zumindest teilweise abgedeckt wird. Die Maske kann entweder auf den Lichtwellenleiter oder auf das optische Bauteil aufgebracht, vorzugsweise geklebt, insbesondere umlaufend aufgeklebt, werden. Es kann der Rahmen der Maske auf der jeweiligen Oberfläche aufliegen oder es können lediglich die Vorsprünge auf der jeweiligen Oberfläche aufliegen und der Rahmen an dem Rand der jeweiligen Oberfläche anliegen. Vorzugsweise wird die Maske auf den Lichtwellenleiter aufgebracht.

Die Figur 4 zeigt schematisch die Anordnung eines Lichtwellenleiters 2, einer Maske 32 und eines optischen Bauteils 11, 12 in verschiedenen Ansichten und Varianten. Dabei zeigt die Figur 4 (a) eine perspektivische Explosionsansicht, in welcher auf dem Lichtwellenleiter 2 eine Maske 32 und auf dieser ein optisches Bauteil, zum Beispiel eine Linse 11, 12, angeordnet sind. Die Figur 4 (b) und die Figur 4 (c) zeigen jeweils eine Ansicht von oben. Die Figuren 4 (b) und 4 (c) unterscheiden sich in der Ausformung der Maske 32. In der Figur 4 (b) entspricht die äußere Umrandung der Maske 32 dem äußeren Rand 30 des Lichtwellenleiters 2. In der Figur 4 (c) ragt die Maske 32 in der gezeigten Ebene, also lateral, über den Rand 30 des Lichtwellenleiter 2 und das optische Bauteil 11, 12 zumindest teilweise hinaus. In den Figuren 4 (b) und 4 (c) ist eine Einkoppeleinrichtung 7 gezeigt. Die Einkoppeleinrichtung 7 kann ein Prisma, Spiegel, diffraktives Element oder Hologramm sein.

Die Maske 32 weist in den gezeigten Beispielen jeweils einen umlaufenden Rahmen 35, welcher in den gezeigten Varianten geschlossen ausgestaltet ist, eine von dem Rahmen gebildete Öffnung 36, bei welcher es sich in den gezeigten Varianten um eine Durchgangsöffnung handelt, und drei Vorsprünge 34 auf, welche sich lateral in die Öffnung hinein erstrecken, also in diese hineinragen. Die teilweise schraffiert markierten Vorsprünge 34 sind als flächige oder plane Ausstülpungen ausgestaltet, die als Abstandshalter im Klebeprozess dienen. Die Dicke 33 der Maske 32 bestimmt die Dicke der Klebeschicht. Typische Werte liegen hier zwischen 1 µm und 1 mm. Dickere Schichten können teilweise den nachteiligen Unterschied thermischer Ausdehnungskoeffizienten von Lichtwellenleiter 2 und Linsen 11, 12 ausgleichen.

Dadurch, dass die Maske 32 den äußeren Bereich des Lichtwellenleiters 2 überdeckt, bleibt nach dem Kleben eine Umlaufkante 37 des Lichtwellenleiters 2 "frei". Diese Umlaufkante 37 oder ein Teil dieser Umlaufkante 37 wird auch von den Push/Pull-Linsen 11, 12 nicht überdeckt. Alternativ kann die Umlaufkante 37 weggelassen werden und es können nur die Vorsprünge 34 als temporären Spacer appliziert, also auf die jeweilige Oberflächen aufgebracht werden.

Die Adhäsion der Maske 32 verhindert ein Unterlaufen durch den Kleber und ermöglicht ein randfreies Kleben. Die Maske kann mittels eines Greifers, bevorzugt eines Vakuumgreifers, appliziert werden. Zur Positionierung können Marker oder andere optische Hilfsstrukturen dienen, wie z.B. der Rand 30 des Lichtwellenleiters 2, sichtbare Strukturen des Lichtwellenleiters, die Position des Bildgebers bzw. Projektors oder der Einkoppeleinrichtung 7 oder mechanische Anschläge (siehe Figur 5b).

Für die Positionierung und Ausrichtung/Justierung der optischen Bauteile (Lichtwellenleiter und Linsen) werden beispielsweise mechanische Anschläge (3-Punkt-Auflage) für den Lichtwellenleiter und das mindestens eine optische Bauteil, z.B. die aufzuklebende Linse, verwendet. Dabei werden z.B. die Konturen dieser Bauteile verwendet. Die Außenkontur der Linse wird z.B. bei ihrer vorgelagerten Fertigung, insbesondere ihrer Berandung, an die Kontur des Lichtwellenleiters und optional an die Position des Einkoppelbereichs 7 angepasst. Dieser und die weiteren Schritte werden in der Figur 5 veranschaulicht.

In Schritt 24 (siehe Figur 2) wird ein Kleber 16 auf die maskierte Oberfläche des Lichtwellenleiters 2 oder des optischen Bauteils 11, 12 aufgebracht, z.B. in die Öffnung 36 der Maske 32 eingebracht. In dem nachfolgenden Schritt 25 werden die rückseitige Oberfläche 14, 15 des optischen Bauteils 11, 12 und die Oberfläche 3, 4 des Lichtwellenleiters 2 aufeinander aufgelegt, beispielsweise schwimmend und/oder unter Verwendung von Anschlägen aufgelegt. Hierbei kann durch laterales Bewegen des Lichtwellenleiters 2 und des optischen Bauteils 11, 12 zueinander der Kleber 16 gleichmäßig verteilt werden und eine Justierung erfolgen.

In dem nachfolgenden Schritt 26 wird der Kleber 16 ausgehärtet. In einem weiteren Schritt 27 wird die Maske 32 entfernt. Optional können in einem weiteren Schritt 28 die durch die Vorsprünge 34 und/oder die Maske 32a verursachten Vertiefungen mit Kleber 16 aufgefüllt werden. Im Anschluss an Schritt 27 oder Schritt 28 kann das Verfahren mit einem weiteren optischen Bauteil 11, 12, zum Beispiel einer zweiten Linse, wiederholt werden. Das weitere optische Bauteil 11, 12 kann dabei mittels des Klebers 16 mit der der bereits beklebten Oberfläche 3, 4 des Lichtwellenleiters 2 gegenüberliegenden Oberfläche 3, 4 mit dem weiteren optischen Bauteil 11, 12 verbunden werden.

Die Figur 5 zeigt schematisch die Schritte 21 bis 28 eines beispielhaften erfindungsgemäßen Verfahrens. Zunächst wird der Lichtwellenleiter 2 ausgerichtet (siehe Figur 5a). Hierzu werden mechanische Anschläge 38 verwendet. Anschließend wird die Maske 32, z.B. das Maskierungstape, entsprechend der Marker (s.o.) appliziert (siehe Figur 5b) und anschließend der Kleber 16 appliziert (siehe Figur 5c). Der Kleber 16 wird mittels Dispenser oder Verdrängungspipette 39 appliziert. Das Volumen ergibt sich aus der freien Fläche, also der Fläche der Öffnung 36, der Maske 32 und Maskendicke 33 plus 7% bis 10% Überschuss. Beispiele für Kleber 16 mit niedriger Brechzahl sind Norland Optical Adhesives, MY Polymers. Das optische Bauteil 11, 12, z.B. die Linse, wird bevorzugt "schwimmend" aufgelegt, so dass sich durch Relativbewegung und eventuellen Druck der Kleber 16 homogen verteilt und die Klebschicht eingestellt werden kann. Zur Fixierung der finalen Position werden weitere mechanische Anschläge 38 eingebracht (siehe Figur 5d).

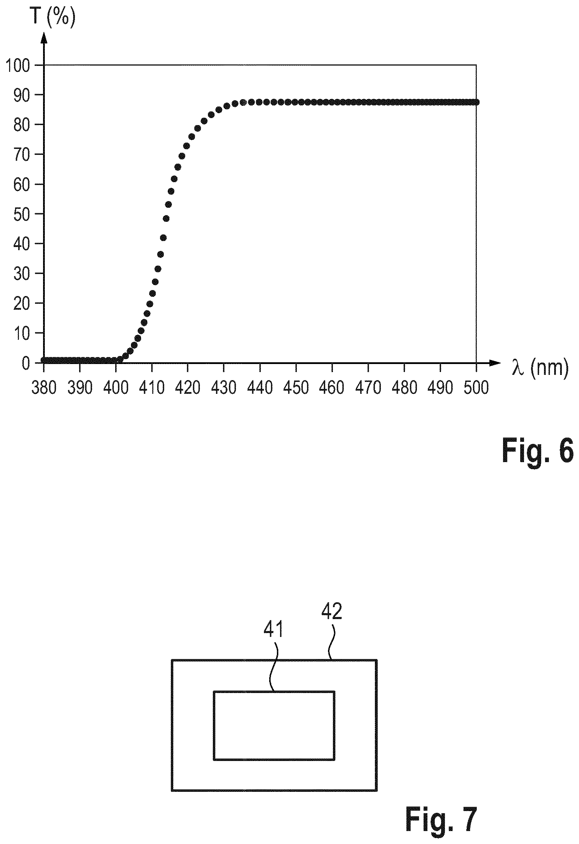

Die vollflächige Aushärtung des Klebers 16 mittels UV-Licht kann bevorzugt durch das optische Bauteil 11, 12, z.B. die Linse, hindurch erfolgen, wobei eine Wellenlänge zwischen 400 nm und 450 nm bevorzugt wird (besonders bevorzugt 420 nm). Dies ergibt sich aus dem Trade-off von Transmission einer Linse aus Brillenglasmaterial, wobei typischerweise unterhalb ca. 380 nm die Transmission stark reduziert wird, und der abnehmenden Absorption des Photoinitiators im UV-Kleber mit zunehmender Wellenlänge. Die Figur 6 zeigt schematisch die Transmission T in Prozent durch ein beispielhaftes optische Bauteil, z.B. die Linse, in Abhängigkeit von der Wellenlänge λ des Lichts in Form eines Diagramms für ein klassisches optometristisches Linsenmaterial (Dicke 3,5 mm) mit UV-Schutz und Blaulichtfilter (BlueGuard).

In dem Fall, in dem zwei Linsen auf den Lichtwellenleiter aufgeklebt werden sollen, kann die erste Linse im Prinzip auch durch den Lichtwellenleiter hindurch aushärten. Da der Lichtwellenleiter aus einem anderen Material bestehen kann als die Linsen, wäre dafür aber eine zweite UV-Quelle (mit einer anderen Wellenlänge) notwendig. Die zweite Linse kann danach allerdings nicht mehr durch den Lichtwellenleiter hindurch ausgehärtet werden, weshalb eine Aushärtung durch die Linse hindurch bevorzugt wird. Während der Aushärtung kann mit Stickstoff gespült werden, um die Terminierung der radikalischen Vernetzungsreaktion durch Sauerstoff zu verhindern.

Alternativ zur bevorzugten passiven Ausrichtung lassen sich alle Elemente aktiv anhand bestehender Referenzpunkte (z.B.: Kontur der Umlaufkante) oder zuvor integrierter optischer Marker am Lichtwellenleiter und den Linsen ausrichten.

Nach der Aushärtung wird die Maske 32, 32a, 32b entfernt (siehe Figur 5e). Die dadurch freiwerdenden Bereiche zwischen dem optischen Bauteil 11, 12 und dem Lichtwellenleiter werden bevorzugt nachträglich mit Kleber aufgefüllt (siehe Figur 5e). Auch weitere Fehlstellen, wie Lufteinschlüsse am Rand, können aufgefüllt werden, sodass final kein Störbereich (Kleberkante) mehr erkennbar ist. Der gesamte Prozess kann für die jeweils andere Linse 11, 12 oder ein weiteres optisches Bauteil wiederholt werden. Eine mittels des erfindungsgemäßen Verfahrens hergestellte optische Anordnung 41 ist in der Figur 5f gezeigt.

Der beschriebene Klebeprozess kann so ausgestaltet sein, dass eine Umlaufkante des Wellenleiters "frei" bleibt, die dann in nachgelagerten Schritten, z.B. bei der Integration eines Push/Pull-Wellenleiter-Verbundes in einen Brillenrahmen, auch wieder als Referenzfläche dienen kann. Das hat außerdem den Vorteil, dass diese Referenzfläche unabhängig von den benötigten Gläserstärken und Gläserdicken (Dioptrien) der Linsen immer die gleiche Geometrie besitzt.

In einer weiteren Variante ist die Öffnung 36 so ausgeformt, dass sie lediglich einen Oberflächenbereich des Lichtwellenleiters 2 umschließt, welcher zur Gewährleistung der Totalreflexion ausgebildet ist. Dieser Oberflächenbereich kann dann mit einem Kleber 16 verklebt, also beschichtet werden, welcher einen zur Gewährleistung der Totalreflexion geeigneten niedrigen Brechungsindex aufweist. Nach dem Entfernen der Maske 32 können die übrigen Oberflächenbereiche des Lichtwellenleiters 2 mit einem weiteren Kleber, welcher vorzugsweise eine bessere Haftfähigkeit als der zuvor verwendete Kleber 16, z.B.: Epoxidharz, Cyanacrylat, Silikonkautschuk, Urethanmethacrylat und Polymethacrylat, aufweist, mit dem optischen Element verklebt werden. Insbesondere kann das Auffüllen der durch die Maske entstandenen Vertiefungen oder Lücken oder Zwischenräume zwischen dem Lichtwellenleiter 2 und dem optischen Bauteil 3, 4 mit einem entsprechenden weiteren Kleber aufgefüllt werden. Diese Variante bietet eine optimale Festigkeit der Klebeverbindung.

Die Figur 7 zeigt schematisch eine erfindungsgemäße Bildwiedergabevorrichtung 42, z.B. ein Head-Mounted-Display 1, oder Bilderfassungsvorrichtung 42, welche mindestens eine erfindungsgemäße optische Anordnung 41 umfasst.

### Bezugszeichenliste:

- 1: Head-Mounted-Displays
- 2: Lichtwellenleiter
- 3: Oberfläche
- 4: Oberfläche
- 5: Schicht aus niedrigbrechendem Medium
- 6: Strahlengang eines Abbildungspfades einer virtuellen Abbildung
- 7: Einkoppeleinrichtung
- 8: Auskoppeleinrichtung
- 9: Eyebox, Auge
- 10: Strahlengang eines Abbildungspfades einer Abbildung der realen Umgebung
- 11: optisches Bauteil, Linse, Push-Linse
- 12: optisches Bauteil, Linse, Pull-Linse
- 13: Oberfläche
- 14: Oberfläche
- 15: Oberfläche
- 16: Kleber
- 21: Bereitstellen eines Lichtwellenleiters und eines optischen Bauteils
- 22: Bereitstellen einer Maske
- 23: Anordnen der Maske auf die vorderseitige Oberfläche des Lichtwellenleiters oder die rückseitige Oberfläche des optischen Bauteils
- 24: Aufbringen von Kleber
- 25: Auflegen der rückseitigen Oberfläche des optischen Bauteils und der vorderseitigen Oberfläche des Lichtwellenleiters aufeinander
- 26: Aushärten des Klebers
- 27: Entfernen der Maske
- 28: Auffüllen von durch die Vorsprünge verursachten Vertiefungen mit Kleber
- 29: Rand
- 30: Rand
- 31: Rand
- 32: Maske
- 32a: Maske
- 32b: Maske
- 33: Dicke
- 34: Vorsprung
- 35: Rahmen
- 36: Öffnung
- 37: Umlaufkante
- 38: mechanischer Anschlag
- 39: Dispenser, Verdrängungspipette
- 40: UV-Aushärtung
- 41: optische Anordnung
- 42: Bildwiedergabevorrichtung oder Bilderfassungsvorrichtung
- T: Tansmission
- λ: Wellenlänge

## Patentansprüche

1. Verfahren zum Herstellen einer optischen Anordnung (41), welche mindestens einen Lichtwellenleiter (2) und mindestens ein optisches Bauteil (11, 12) umfasst,
**dadurch gekennzeichnet, dass**
das Verfahren folgende Schritte umfasst:
- Bereitstellen (21) eines Lichtwellenleiters (2) mit einer Oberfläche (3, 4) und eines optischen Bauteils (11, 12) mit einer rückseitigen Oberfläche (14, 15), wobei die Oberfläche (3, 4) des Lichtwellenleiters (2) und die rückseitige Oberfläche (14, 15) des optischen Bauteils (11, 12) zur einander zugewandten Anordnung aneinander ausgelegt sind und eine aneinander angepasste Oberflächengeometrie aufweisen,
- Bereitstellen (22) mindestens einer Maske (32), welche dazu ausgelegt ist, den Randbereich der Oberfläche (3, 4) des Lichtwellenleiters (2) und der rückseitigen Oberfläche (14, 15) des optischen Bauteils (11, 12) zumindest teilweise abzudecken,
- Anordnen (23) der Maske (32) auf der Oberfläche (3, 4) des Lichtwellenleiters (2) oder der rückseitigen Oberfläche (14, 15) des optischen Bauteils (11, 12), derart dass der Randbereich der Oberfläche (3, 4, 14, 15) zumindest teilweise abgedeckt wird,
- Aufbringen (24) eines Klebers (16) auf die Oberfläche (3, 4) des Lichtwellenleiters (2) oder die rückseitige Oberfläche (14, 15) des optischen Bauteils (11, 12) (bevorzugt auf Oberfläche, auf welcher die Maske (32) angeordnet ist) der Maske (32),
- aufeinander Auflegen (25) der rückseitigen Oberfläche (14, 15) des optischen Bauteils (11, 12) und der Oberfläche (3, 4) des Lichtwellenleiters (2),
- Aushärten (26) des Klebers (16), und
- Entfernen (27) der Maske (32).

2. Verfahren nach Anspruch 1,
**dadurch gekennzeichnet, dass**
die Maske (32) einen Rahmen (35), eine in dem Rahmen (35) angeordnete Öffnung (36) umfasst, wobei der Kleber (16) in die Öffnung (36) der Maske (32) eingebracht wird.

3. Verfahren nach Anspruch 2,
**dadurch gekennzeichnet, dass**
die Maske (32) eine Anzahl an sich von dem Rahmen (35) in die Öffnung (36) hinein erstreckende Vorsprünge (34) umfasst.

4. Verfahren nach einem der Ansprüche 1 bis 3,
**dadurch gekennzeichnet, dass**
die Oberfläche (3, 4) des Lichtwellenleiters (2) einen zur Totalreflexion ausgelegten Flächenbereich umfasst und die Maske so ausgebildet ist, dass die von der Maske nicht abgedeckte Fläche des Lichtwellenleiters (2) an den zur Totalreflexion ausgelegten Flächenbereich angepasst ist.

5. Verfahren nach einem der Ansprüche 1 bis 4,
**dadurch gekennzeichnet, dass**
als optisches Bauteil (14, 15) ein optisches Bauteil (14, 15) bereitgestellt wird, dessen Fertigung bezüglich der optischen Wirkung abgeschlossen ist,
und/oder
als optisches Bauteil (14, 15) ein optisches Bauteil (14, 15) bereitgestellt wird, welches eine beschichtete vorderseitige Oberfläche (13, 16) umfasst.

6. Verfahren nach einem der Ansprüche 1 bis 5,
**dadurch gekennzeichnet, dass**
aufgrund der Maske (32) durch die Entfernung der Maske (32) entstandene Vertiefungen mit Kleber (16) aufgefüllt werden.

7. Verfahren nach einem der Ansprüche 1 bis 6,
**dadurch gekennzeichnet, dass**
nach dem Entfernen der Maske (32) zwischen die Oberfläche (3, 4) des Lichtwellenleiters (2) und die rückseitige Oberfläche (14, 15) des optischen Bauteils (11, 12) ein weiterer Kleber eingebracht wird, welcher eine von dem zuvor aufgebrachten Kleber (16) abweichende Zusammensetzung aufweist.

8. Verfahren nach einem der Ansprüche 1 bis 7,
**dadurch gekennzeichnet, dass**
der Kleber (16) und/oder der weitere Kleber durch das optische Bauteil (14, 15) hindurch ausgehärtet (26) wird.

9. Verfahren nach einem der Ansprüche 1 bis 8,
**dadurch gekennzeichnet, dass**
als optisches Bauteil (11, 12) eine Linse bereitgestellt wird und/oder ein optisches Element bereitgestellt wird, welches ausgelegt ist zur Korrektur von Fehlsichtigkeit in einem Abbildungspfad einer realen Abbildung der Umgebung und/oder zur Korrektur von Fehlsichtigkeit in einem Abbildungspfad einer virtuellen Abbildung und/oder zur Fokussierung einer virtuellen Abbildung in einem Abbildungspfad einer virtuellen Abbildung.

10. Verfahren nach einem der Ansprüche 1 bis 9,
**dadurch gekennzeichnet, dass**
als optisches Bauteil (11, 12) ein optisches Bauteil (11, 12) bereitgestellt wird, welches eine plan oder gekrümmt ausgestaltete rückseitige Oberfläche (14, 15) umfasst, und als Lichtwellenleiter (2) ein Lichtwellenleiter (2) bereitgestellt wird, welcher eine plan oder gekrümmt ausgestaltete Oberfläche (3, 4) umfasst.

11. Verfahren nach einem der Ansprüche 1 bis 10,
**dadurch gekennzeichnet, dass**
als optisches Bauteil (11, 12) ein optisches Bauteil (11, 12) mit einer oxidisch ausgebildeten rückseitigen Oberfläche (14, 15) bereitgestellt wird und/oder als Lichtwellenleiter (2) ein Lichtwellenleiter (2) mit einer oxidisch ausgebildeten Oberfläche (3, 4) bereitgestellt wird.

12. Verfahren nach einem der Ansprüche 1 bis 11,
**dadurch gekennzeichnet, dass**
das Anordnen (23) der Maske (32) mittels eines Greifers durchgeführt wird und/oder das Einbringen (24) des Klebers (16) in die Öffnung (36) mittels eines Dispensers oder einer Verdrängungspipette (39) durchgeführt wird.

13. Verfahren nach einem der Ansprüche 1 bis 12,
**dadurch gekennzeichnet, dass**
die Position des Lichtwellenleiters (2) und/oder der Maske (32) und/oder des optischen Bauteils (11, 12) in Bezug auf mindestens ein anderes der zuvor genannten Bauteile (2, 11, 12, 32) mittels mindestens einen mechanischen Anschlags (38) justiert wird.

14. Verfahren nach einem der Ansprüche 1 bis 13,
**dadurch gekennzeichnet, dass**
ein Kleber (16) verwendet wird, welcher eine niedrigere Brechzahl als der Lichtwellenleiter (2) aufweist, oder ein Lichtwellenleiter (2) verwendet wird, welcher eine Beschichtung mit einem Material aufweist, welches eine niedrigere Brechzahl als der Lichtwellenleiter (2) aufweist.

15. Optische Anordnung (41), welche gemäß eines Verfahrens nach einem der Ansprüche 1 bis 14 hergestellt ist.

## Claims

1. Method for producing an optical arrangement (41) comprising at least one optical waveguide (2) and at least one optical component (11, 12),
**characterized in that**
the method comprises the following steps:
- providing (21) an optical waveguide (2), which has a surface (3, 4), and an optical component (11, 12), which has a back-side surface (14, 15), wherein the surface (3, 4) of the optical waveguide (2) and the back-side surface (14, 15) of the optical component (11, 12) are designed for arrangement on one another in a manner facing one another and have a surface geometry matched to one another,
- providing (22) at least one mask (32) which is designed to at least partly cover the edge region of the surface (3, 4) of the optical waveguide (2) and of the back-side surface (14, 15) of the optical component (11, 12),
- arranging (23) the mask (32) on the surface (3, 4) of the optical waveguide (2) or on the back-side surface (14, 15) of the optical component (11, 12), in such a way that the edge region of the surface (3, 4, 14, 15) is at least partly covered,
- applying (24) an adhesive (16) to the surface (3, 4) of the optical waveguide (2) or to the back-side surface (14, 15) of the optical component (11, 12) (preferably to the surface on which the mask (32) is arranged) of the mask (32),
- placing (25) the back-side surface (14, 15) of the optical component (11, 12) and the surface (3, 4) of the optical waveguide (2) on top of one another,
- curing (26) the adhesive (16), and
- removing (27) the mask (32).

2. Method according to Claim 1,
**characterized in that**
the mask (32) comprises a frame (35) and an opening (36) arranged in the frame (35), wherein the adhesive (16) is introduced into the opening (36) in the mask (32).

3. Method according to Claim 2,
**characterized in that**
the mask (32) comprises a number of projections (34) that extend from the frame (35) into the opening (36).

4. Method according to any of Claims 1 to 3,
**characterized in that**
the surface (3, 4) of the optical waveguide (2) comprises a zone designed for total-internal reflection, and the mask is embodied in such a way that the area of the optical waveguide (2) that is not covered by the mask is matched to the zone designed for total-internal reflection.

5. Method according to any of Claims 1 to 4,
**characterized in that**
an optical component (14, 15) that is fully manufactured in relation to the optical effect is provided as optical component (14, 15),
and/or
an optical component (14, 15) that comprises a coated front-side surface (13, 16) is provided as optical component (14, 15).

6. Method according to any of Claims 1 to 5,
**characterized in that**
on account of the mask (32), depressions that have arisen as a result of removing the mask (32) are filled with adhesive (16).

7. Method according to any of Claims 1 to 6,
**characterized in that**
following the removal of the mask (32), a further adhesive with a composition that deviates from the adhesive (16) applied previously is introduced between the surface (3, 4) of the optical waveguide (2) and the back-side surface (14, 15) of the optical component (11, 12).

8. Method according to any of Claims 1 to 7,
**characterized in that**
the adhesive (16) and/or the further adhesive is cured (26) through the optical component (14, 15).

9. Method according to any of Claims 1 to 8,
**characterized in that**
a lens is provided, and/or an optical element designed to correct a refractive error in an imaging path of a real image representation of the surroundings and/or to correct a refractive error in an imaging path of a virtual image representation and/or to focus a virtual image representation in an imaging path of a virtual image representation is provided, as optical component (11, 12).

10. Method according to any of Claims 1 to 9,
**characterized in that**
an optical component (11, 12) which comprises a back-side surface (14, 15) with a plane or curved embodiment is provided as optical component (11, 12), and an optical waveguide (2) which comprises a surface (3, 4) with a plane or curved embodiment is provided as optical waveguide (2).

11. Method according to any of Claims 1 to 10,
**characterized in that**
an optical component (11, 12) with an oxidic back-side surface (14, 15) is provided as optical component (11, 12), and/or an optical waveguide (2) with an oxidic surface (3, 4) is provided as optical waveguide (2).

12. Method according to any of Claims 1 to 11,
**characterized in that**
the mask (32) is arranged (23) by means of a gripper, and/or the adhesive (16) is introduced (24) into the opening (36) by means of a dispenser or a positive displacement pipette (39).

13. Method according to any of Claims 1 to 12,
**characterized in that**
the position of the optical waveguide (2) and/or the mask (32) and/or the optical component (11, 12) in relation to at least one other of the aforementioned components (2, 11, 12, 32) is adjusted by means of at least one mechanical stop (38).

14. Method according to any of Claims 1 to 13,
**characterized in that**
use is made of an adhesive (16) with a lower refractive index than the optical waveguide (2), or use is made of an optical waveguide (2) that comprises a coating having a material that has a lower refractive index than the optical waveguide (2).

15. Optical arrangement (41) produced according to a method according to any of Claims 1 to 14.

## Revendications

1. Procédé de fabrication d'un agencement optique (41), qui comprend au moins un guide d'ondes optiques (2) et au moins un composant optique (11, 12),
**caractérisé en ce que**
le procédé comprend les étapes suivantes :
- mise à disposition (21) d'un guide d'ondes optiques (2) présentant une surface (3, 4) et d'un composant optique (11, 12) présentant une surface arrière (14, 15), la surface (3, 4) du guide d'ondes optiques (2) et la surface arrière (14, 15) du composant optique (11, 12) étant conçues l'une par rapport à l'autre pour un agencement orienté l'une vers l'autre et présentant une géométrie de surface adaptée l'une à l'autre,
- mise à disposition (22) d'au moins un masque (32) qui est conçu pour recouvrir au moins partiellement la zone de bord de la surface (3, 4) du guide d'ondes optiques (2) et de la surface arrière (14, 15) du composant optique (11, 12),
- agencement (23) du masque (32) sur la surface (3, 4) du guide d'ondes optiques (2) ou sur la surface arrière (14, 15) du composant optique (11, 12) de telle sorte que la zone de bord de la surface (3, 4, 14, 15) est au moins partiellement recouverte,
- application (24) d'un adhésif (16) sur la surface (3, 4) du guide d'ondes optiques (2) ou sur la surface arrière (14, 15) du composant optique (11, 12) (de préférence sur la surface sur laquelle le masque (32) est agencé) du masque (32),
- application (25) l'une sur l'autre de la surface arrière (14, 15) du composant optique (11, 12) et de la surface (3, 4) du guide d'ondes optiques (2),
- durcissement (26) de l'adhésif (16) et
- retrait (27) du masque (32).

2. Procédé selon la revendication 1,
**caractérisé en ce que**
le masque (32) comprend un cadre (35), une ouverture (36) agencée dans le cadre (35), l'adhésif (16) étant introduit dans l'ouverture (36) du masque (32).

3. Procédé selon la revendication 2,
**caractérisé en ce que**
le masque (32) comprend un certain nombre de saillies (34) s'étendant à partir du cadre (35) dans l'ouverture (36).

4. Procédé selon l'une des revendications 1 à 3,
**caractérisé en ce que**
la surface (3, 4) du guide d'ondes optiques (2) comprend une zone surfacique conçue pour une réflexion totale et le masque est réalisé de telle sorte que la surface non recouverte par le masque du guide d'ondes optiques (2) est adaptée à la zone surfacique conçue pour la réflexion totale.

5. Procédé selon l'une des revendications 1 à 4,
**caractérisé en ce que**
on met à disposition, comme composant optique (14, 15), un composant optique (14, 15) dont la fabrication est terminée en ce qui concerne l'effet optique,
et/ou
on met à disposition, comme composant optique (14, 15), un composant optique (14, 15) qui comprend une surface avant (13, 16) revêtue.

6. Procédé selon l'une des revendications 1 à 5,
**caractérisé en ce que**
des creux formés en raison du masque (32) par le retrait du masque (32) sont remplis par l'adhésif (16).

7. Procédé selon l'une des revendications 1 à 6,
**caractérisé en ce que**
un autre adhésif, qui présente une composition s'écartant de celle de l'adhésif (16) appliqué au préalable, est introduit après le retrait du masque (32) entre la surface (3, 4) du guide d'ondes optiques (2) et la surface arrière (14, 15) du composant optique (11, 12).

8. Procédé selon l'une des revendications 1 à 7,
**caractérisé en ce que**
l'adhésif (16) et/ou l'autre adhésif est/sont durci(s) (26) à travers le composant optique (14, 15).

9. Procédé selon l'une des revendications 1 à 8,
**caractérisé en ce que**
on met à disposition, comme composant optique (11, 12), une lentille et/ou un élément optique qui est conçu pour la correction d'un défaut de vision dans un trajet de représentation d'une représentation réelle de l'environnement et/ou pour la correction d'un défaut de vision dans un chemin de représentation d'une représentation virtuelle et/ou pour la focalisation d'une représentation virtuelle dans un chemin de représentation d'une représentation virtuelle.

10. Procédé selon l'une des revendications 1 à 9,
**caractérisé en ce que**
on met à disposition, comme composant optique (11, 12), un composant optique (11, 12) qui comprend une surface arrière (14, 15) plane ou incurvée et, comme guide d'ondes optiques (2), un guide d'ondes optiques (2) qui comprend une surface (3, 4) plane ou incurvée.

11. Procédé selon l'une des revendications 1 à 10,
**caractérisé en ce que**
on met à disposition, comme composant optique (11, 12), un composant optique (11, 12) présentant une surface arrière (14, 15) de type oxyde et/ou, comme guide d'ondes optiques (2), un guide d'ondes optiques (2) présentant une surface (3, 4) de type oxyde.

12. Procédé selon l'une des revendications 1 à 11,
**caractérisé en ce que**
l'agencement (23) du masque (32) est réalisé au moyen d'un préhenseur et/ou l'introduction (24) de l'adhésif (16) dans l'ouverture (36) est réalisée au moyen d'un dispositif de distribution ou d'une pipette d'expulsion (39).

13. Procédé selon l'une des revendications 1 à 12,
**caractérisé en ce que**
la position du guide d'ondes optiques (2) et/ou du masque (32) et/ou du composant optique (11, 12) est ajustée par rapport à au moins un autre des composants (2, 11, 12, 32) susmentionnés au moyen d'au moins une butée mécanique (38).

14. Procédé selon l'une des revendications 1 à 13,
**caractérisé en ce que**
on utilise un adhésif (16) qui présentent un indice de réfraction inférieur à celui du guide d'ondes optiques (2) ou on utilise un guide d'ondes optiques (2) qui présente un revêtement en un matériau qui présente un indice de réfraction inférieur à celui du guide d'ondes optiques (2).

15. Agencement optique (41), fabriqué selon un procédé selon l'une quelconque des revendications 1 à 14.
